Europäisches Patentamt

European Patent Office

Office européen des brevets

(11) Numéro de publication: **0 351 335**
**A1**

## DEMANDE DE BREVET EUROPEEN

(21) Numéro de dépôt: **89420250.6**

(22) Date de dépôt: **11.07.89**

(51) Int. Cl.⁵: **G 07 F 11/04**
G 07 F 7/02, G 07 F 17/42,
G 07 F 9/02

(30) Priorité: **13.07.88 FR 8809773**

(43) Date de publication de la demande:
**17.01.90 Bulletin 90/03**

(84) Etats contractants désignés: **BE CH DE ES LI**

(71) Demandeur: **SOCIETE D'ETUDES D'INVESTISSEMENTS POUR LES AFFAIRES - SEIA**
**3 allée du Pic Vert-Le Calabert**
**F-69130 Ecully (FR)**

**Caille, Roger**
**3 allée du Pic Vert Le Calabert**
**F-69130 Ecully (FR)**

(72) Inventeur: **Caille, Roger**
**3 Allée du Pic Vert**
**Le Calabert F-69130 Ecully (FR)**

(74) Mandataire: **Laurent, Michel et al**
**Cabinet LAURENT 20, rue Louis Chirpaz B.P. 32**
**F-69131 Ecully Cédex (FR)**

(54) Distributeur autonome de produits d'édition.

(57) Distributeur autonome de produits d'édition, comprenant :
- une pluralité de magasins (1a-c) de stockage desdits produits d'édition (2) ;
- un organe apte à prélever un produit (2) dans un magasin (1a-c), et à le délivrer dans une case de réception (21) ;
- un sélecteur (4) du produit choisi par l'utilisateur ;
- un dispositif de paiement par carte (5) ;
- une mémoire morte (8) pour le stockage, notamment d'un logiciel de traitement d'information ; **caractérisé** en ce qu'il comporte en outre une connexion (11) pour communiquer avec un système centraliseur (12) de surveillance et de gestion d'un réseau auquel appartient ledit distributeur autonome.

FIG.1

**Description**

## DISTRIBUTEUR AUTONOME DE PRODUITS D'EDITION

La présente invention concerne un distributeur autonome de différents produits d'édition pouvant être utilisés en libre-service. Par "produits d'édition", on entend aussi bien des livres que des journaux ou magazines, c,est-à-dire toutes sortes de produits de la presse quotidienne, hebdomadaire ou autres.

Le besoin existe, sans qu'il soit réellement satisfait à ce jour, de distributeurs automatiques de périodiques, qui soient autonomes c'est-à-dire ne nécessitant pas l'assistance d'un vendeur.

On a décrit dans le brevet FR-A-2 608 570 un distributeur de produits plats, notamment d'emballages postaux et autres magazines ou journaux. Ce dispositif distributeur se compose d'une pluralité de magasins inclinés de stockage des produits, muni d'un organe mobile horizontalement sur la largeur du dispositif, comprenant un chariot mobile verticalement et destiné à saisir le produit choisi par l'utilisateur. Ce dispositif comporte également un système de paiement relié à un circuit de commande. Si certes un tel distributeur automatique permet de s'affranchir d'un vendeur, en revanche, le problème concernant la gestion des stocks des différents magasins du distributeur et/ou la maintenance de ce distributeur ne sont pas réglés.

On a décrit un distributeur similaire dans le brevet GB-A-2 143 662. Ce distributeur de conception assez voisine du distributeur décrit dans le document précédent présente un organe de paiement à carte. De manière avantageuse, ce distributeur comporte une unité centrale destinée à assurer l'interface entre le choix de l'utilisateur et la sélection mécanique du produit ou magazine désiré. En revanche, comme dans le document précédent, la gestion proprement dite des stocks de ce distributeur ou même la maintenance ne sont pas assurées.

La présente invention vise à pallier ces inconvénients. Elle a pour objet un distributeur autonome de produits d'édition, tels que des journaux, permettant une gestion rationnelle et centralisée des périodiques vendus. Elle a également pour trait un distributeur automatique, pouvant être utilisé facilement comme borne de distribution, par exemple dans les villes, à tout endroit accessible au public, à pied ou en voiture.

Selon l'invention, un distributeur autonome comprend :
- une pluralité de magasins de stockage desdits produits d'édition ;
- un organe apte à prélever un produit dans un magasin et à le délivrer dans une case de réception ;
- un sélecteur du produit choisi par l'utilisateur ;
- un dispositif de paiement par carte, apte d'une part à débiter du crédit de ladite carte le montant de l'opération et d'autre part, une fois ce débit validé, à induire l'actionnement de l'organe de prélèvement, par l'intermédiaire d'un microprocesseur ;
- une mémoire morte pour le stockage, notamment d'un logiciel traitement d'information, permettant un dialogue avec l'utilisateur, et assurant le fonctionnement automatique du distributeur, en fonction des informations échangées avec l'utilisateur et avec les différents périphériques.

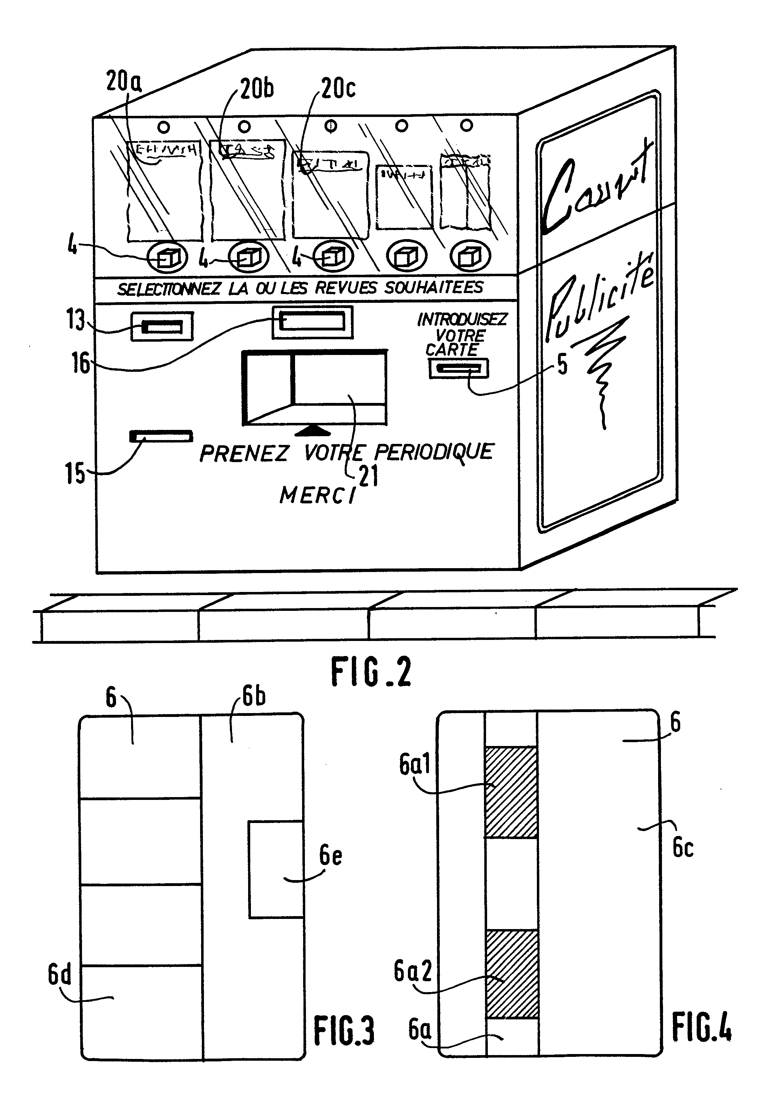

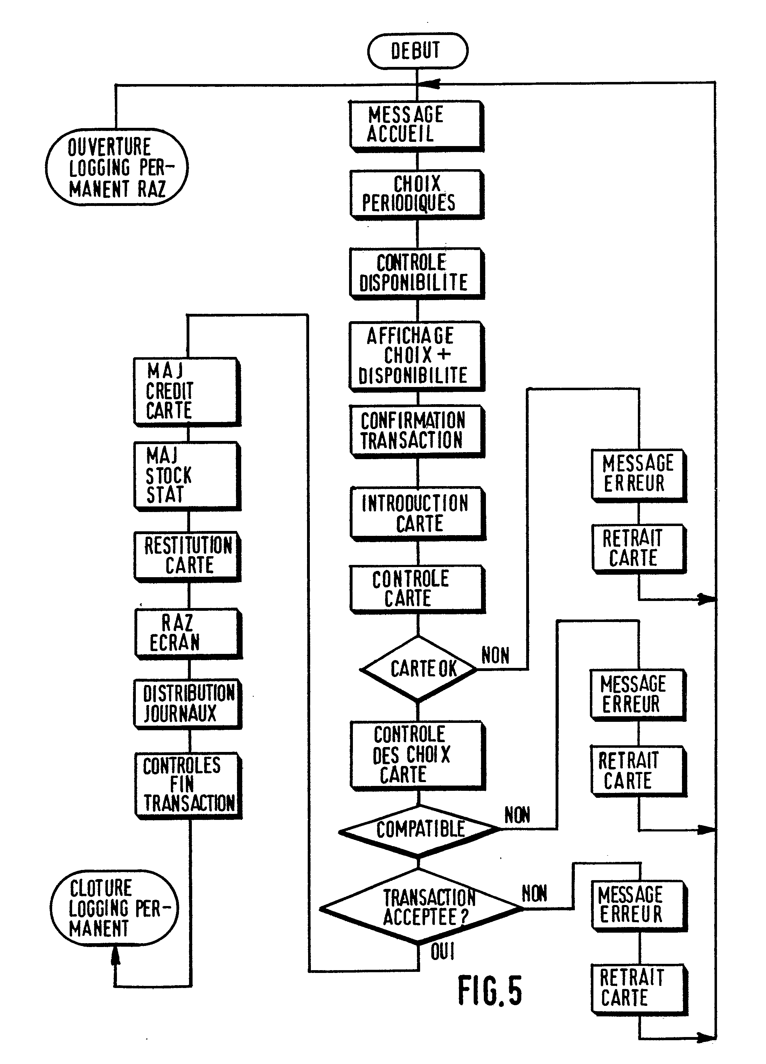

Par "carte", on entend une carte de paiement, c'est-à-dire aussi bien une carte d'abonnement achetée préalablement par l'utilisateur, et décrite ci-après par référence aux figures 3 et 4, qu'une carte de crédit spécifique voire une carte de crédit bancaire.

Selon l'invention, le distributeur autonome se caractérise en ce qu'il comporte en outre une connexion pour communiquer à un système centralisateur de surveillance et de gestion d'un réseau auquel appartient le distributeur autonome.

En d'autres termes, la présente invention se caractérise en ce que chacun des distributeurs autonomes faisant partie d'un même réseau, sont reliés en permanence à un centraliseur, destiné d'une part à contrôler et gérer les stocks des différents produits d'édition contenus dans chacun desdits distributeurs autonomes, et d'autre part, à assurer en permanence un système de surveillance, notamment afin d'assurer une maintenance efficace.

Avantageusement en pratique :
- la connexion entre les différents distributeurs autonomes du réseau et le système centraliseur est effectuée par le biais des réseaux commutés de télécommunication ;
- l'organe de prélèvement est constitué par un organe unique qui se déplace devant les différents magasins et prélève le produit sélectionné par l'utilisateur pour le faire glisser par gravité dans une goulotte reliée à la case de réception ;
- le microprocesseur est destiné :
. à gérer le dialogue avec l'utilisateur ;
. et à recevoir les informations émises par des capteurs de présence de produits dans chacun des magasins afin de les traiter et de les transférer au système centraliseur ;
- le système centraliseur comporte :
. des moyens pour afficher le suivi de chacun des distributeurs autonomes ;
. des alarmes destinées à détecter pour chacun des distributeurs, les agressions, les pannes et/ou la pénurie de l'un quelconque des produits d'édition ;
. des fiches de gestion de chacun des distributeurs.

La présente invention concerne également une carte de paiement associée auxdits distributeurs autonomes selon les caractéristiques précédentes, et comprenant une face de référence réservée à la présentation d'informations, et une face opposée comportant un support pour différentes informations, lisibles et/ou modifiables par machine, dont une information ayant la valeur d'un crédit. Cette carte se caractérise en ce que la face de référence comporte une zone affectée à la reproduction symbolique du ou des types de produits pouvant être délivrés à l'utilisateur, et le support de la face opposée comporte une zone pour une ou des informations lisibles uniquement par machine, identifiant respectivement le ou les mêmes types de produits représentés de manière symbolique sur la face de référence.

Avantageusement, la face de référence de ladite carte comporte une autre zone affectée à la reproduction du prix d'achat de la carte, en correspondance avec la valeur initiale de l'information présente sur le support de la face opposée, identifiant le crédit en cours de ladite carte.

La manière dont l'invention peut être réalisée et les avantages qui en découlent ressortiront mieux de l'exemple de réalisation qui suit, donné à titre indicatif et non limitatif à l'appui des figures annexées dans lesquelles :

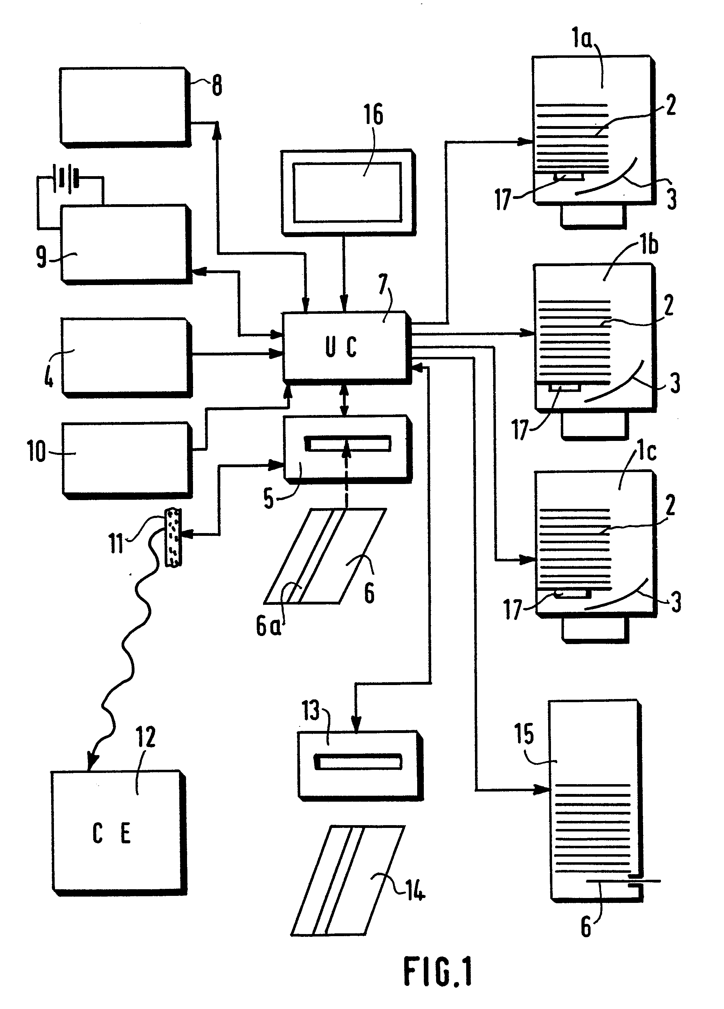

    - la figure 1 représente de manière schématique un distributeur conforme à l'invention ;

    - la figure 2 représente l'aspect extérieur d'un tel système agencé et construit sous forme de borne libre-service ;

    - les figures 3 et 4 représentent respectivement la face supérieure et la face opposée à l'intérieur d'une carte de paiement conforme à l'invention ;

    - la figure 5 présente un diagramme de fonctionnement d'un système selon l'invention, au cours d'une transaction élémentaire ;

    - la figure 6 représente un diagramme de surveillance d'un système conforme à l'invention, en liaison avec un central de surveillance notamment.

Un distributeur autonome selon l'invention comporte principalement :

- une pluralité de magasins (1a, 1b, 1c), affecté chacun à un type de journal donné, comportant chacun d'une part un moyen (2) de stockage en quantité, c'est-à-dire sous forme de pile des journaux, et d'autre part un moyen de délivrance (3) à l'unité des journaux stockés ;

- un sélecteur (4) du type de produit choisi, se présentant sous la forme d'une pluralité de boutons, présents sur la face avant de la borne représentée à la figure 2 ;

- un dispositif (5) de lecture et d'écriture sur une carte de paiement (6), portée par l'utilisateur, ladite carte comportant un support magnétique (6a) pour une information lisible et/ou modifiable par machine ;

- une unité centrale (7) de traitement d'information, par exemple un microprocesseur ;

- une mémoire morte (8), pour le stockage d'une part d'un logiciel de traitement d'informations, permettant un dialogue avec l'utilisateur, c'est-à-dire le porteur de la carte de paiement, et assurant le fonctionnement automatique du système, en fonction de l'information échangée avec l'utilisateur et les différents périphériques décrits précédemment, et d'autre part d'une base de données permettant à tout moment de contrôler le fonctionnement du système, son état, et les stocks présents dans les différents magasins (1a, 1b, 1c) ;

- une connexion (11) pour communiquer avec un central de surveillance (12) ;

- un afficheur (16) de messages ou informations à destination de l'utilisateur ;

- une mémoire vive permettant notamment de sauvegarder en permanence le système d'exploitation de l'unité centrale (7), une mémoire programmable (10) du type EPROM par exemple, permettant de modifier périodiquement si nécessaire différents paramètres de fonctionnement ou de calcul du système, par exemple le prix de vente à l'unité des différents journaux présents dans les magasins (1a, 1b, 1c).

Dans une variante du distributeur autonome conforme à l'invention, celui-ci peut comprendre un moyen (13) de lecture et/ou écriture sur une carte (14) de crédit bancaire, et d'autre part un moyen (15) de délivrance à l'unité d'une carte de paiement, pour l'acquisition par le porteur de différents journaux, délivrés à l'unité par le système lui fournissant sa carte de paiement, ou par d'autres systèmes identiques situés à d'autres endroits.

Conformément à la figure 2, un tel système se présente sous la forme d'une borne parallélipipédique disposée par exemple sur un trottoir dans une ville, comportant sur sa face d'utilisation :
- les différents boutons (4) du sélecteur, associés respectivement à des représentations schématiques (20a, 20b, 20c) des différents journaux présents dans la borne ; il peut s'agir par exemple d'une réduction de la page de garde avec le titre du journal concerné ;
- le dispositif (5) de lecture et écriture sur la carte de paiement ;
- l'afficheur (16) ;
- la case (21) de réception dans laquelle le journal choisi est délivré après la transaction ;
- un disposition (13) de lecture et/ou écriture sur une carte bancaire ;
- un orifice (15) de délivrance à l'unité des cartes de paiement, achetées par l'utilisateur au moyen de sa carte de crédit bancaire.

Les autres faces de la borne représentées à la figure 2 peuvent être affectées à des représentations publicitaires.

La carte de paiement, du type carte d'abonnement, permettant le fonctionnement du système de distribution précédemment décrit comporte, conformément aux figures 3 et 4 :
- une face de référence (6b) représentée à la figure 3, affectée à la présentation d'informations,en l'occurrence, d'une part différentes zones (6d) comportant une représentation symbolique du ou des journaux pouvant être délivrés à l'utilisateur, et d'autre part une autre zone (6e) affectée à la reproduction du prix d'achat de la carte ;
- une face opposée (6c) représentée à la figure 4, comportant un support magnétique (6a) pour différentes informations,lisibles et modifiables par machine, à savoir, d'une part une zone (6a$_1$) pour une information ayant la valeur d'un crédit, et d'autre part une zone (6a$_2$) pour une ou des informations identifiant le ou les journaux auxquels la carte donne droit ; la valeur initiale de l'information présente dans la zone (6) est donc en correspondance avec le prix affiché dans la zone (6e) de la carte ; quant aux informations présentes dans la zone (6), elles sont en correspondance avec les types de journaux représentés de manière symbolique dans les zones (6d).

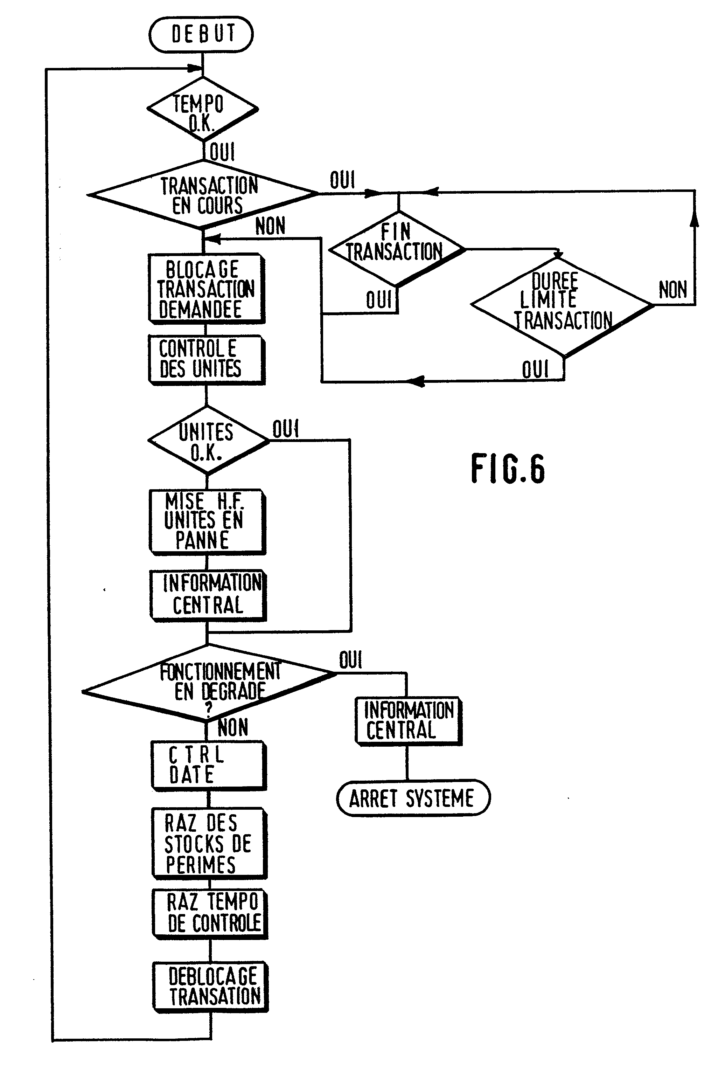

Le fonctionnement du système de distribution décrit précédemment est maintenant explicité par référence à la figure 5 représentant l'organigramme d'une transaction élémentaire, et à la figure 6 représentant l'organigramme de controle du système.

Un message d'accueil est affiché sur l'afficheur, (16), puis on indique ensuite à l'utilisateur les différentes opérations et commandes à effectuer, et on lui envoie toutes les informations appropriées, comme le nom du ou des périodiques pouvant être délivrés avec sa carte de paiement (6), le crédit restant disponible sur cette dernière, etc...

Ensuite, après un message approprié sur l'afficheur (16), l'utilisateur choisit un ou des périodiques repérés par la page de garde sur la face frontale de la borne, par les représentations (30a, 30b, 30c). Pour ce faire, l'utilisateur appuie sur la ou les touches (4) frontales de la borne.

Ensuite, le système controle la disponibilité du ou des périodiques choisis par l'utilisateur. Cette disponibilité est repérée par un voyant (50a, 50b, 50c) présent sur la face frontale de la borne, et affecté à chaque magasin, et éclairé par exemple de couleur rouge en cas d'indisponibilité du périodique choisi. L'utilisateur peut tenir compte ou non de ce voyant pour effectuer son choix, et c'est pourquoi un controle de la disponibilité du journal par le système s'avère nécessaire.

Après controle, un message indique à l'utilisateur dans l'afficheur (16), d'une part son choix du ou des périodiques, et d'autre part la disponibilité de ces derniers. Si le périodique choisi est disponible, la transaction est validée, et le système poursuit cette dernière de manière autonome ; si le périodique est indisponible, un message d'erreur est affiché dans l'afficheur (16).

L'utilisateur introduit sa carte dans le dispositif ou lecteur (5). Le système effectue alors différents controles de la carte introduite, et vérifie différents paramètres de cette dernière, comme la nature de la carte, le crédit disponible, etc... En cas de carte non valide, un message d'erreur approprié est affiché sur l'afficheur (16), et la carte (6) est extraite du lecteur (5) pour être reprise par l'utilisateur.

A partir de ce moment, le système controle le ou les périodiques choisis, par rapport aux informations disponibles sur la piste magnétique ($6a_2$) et identifiant le ou les périodiques auxquels la carte de paiement donne droit. En cas d'incompatibilité, un message d'erreur approprié est affiché sur l'afficheur (16), et la carte de paiement est sortie du lecteur (5) pour retrait par l'utilisateur.

En cas de transaction validée, le système :
- par le lecteur (13), sur le support magnétique (6a) de la carte (6), et plus précisément dans la zone ($6a_1$), substitue à la valeur initiale du crédit une nouvelle valeur égale au crédit initial, diminuée du prix du ou des périodiques choisis ; ce calcul est effectué par le système, à partir de paramètres (comme le prix) introduits dans ce dernier au moyen de la mémoire programmable (10), et des données et informations acquises lors de la transaction, et stockées par exemple dans une base de données dans la mémoire morte (8) ;

- toujours, dans cette même base de données, met à jour le stock théorique du ou des périodiques en magasins (1a,1b,1c), et ce pour un journal donné, en partant du stock initial, du nombre d'exemplaires chargés dans le magasin correspondant lors d'une tournée de réapprovisionnement, et du nombre de transactions effectuées et concernant ledit journal ;
- par le lecteur (5), restitue la carte (6) ;
- efface tous les messages restant affichés sur l'afficheur (16) ;
- commande l'organe (3) de délivrance à l'unité du magasin (1a, 1b, 1c) du périodique choisi, mais seulement si l'utilisateur a effectivement retiré sa carte de paiement restituée par le lecteur (5) ; le ou les périodiques choisis tombent dans le bac de réception.

Puis le système est réinitialisé, après divers controles de fin de transaction, en attente d'une nouvelle transaction.

Par référence à la figure 6, et selon une caractéristique fondamentale de l'invention, le système de distribution est en permanence, à la fois auto-controlé et télécontrolé par le centre d'entretien ou centrali seur (12) ; à supposer que le centre de télécontrole tombe en panne, le système selon l'invention peut travailler de manière autonome.

Il existe tout d'abord une temporisation permettant de limiter le temps affecté à une transaction, et d'annuler cette dernière une fois ce temps dépassé. Tant qu'une transaction est en cours, l'auto-controle et le télé-controle du système sont neutralisés, et ne peuvent intervenir. Il existe toutefois la possibilité de télécommander le blocage de la transaction demandée ou en cours, à partir du centre d'entretien et de surveillance (12).

Les différents périphériques et unités sont controlés en permanence par le système, pour surveiller en particulier leurs défaillances de toutes sortes. L'ensemble du système est notamment surveillé vis-à-vis des effractions ou tentatives d'effraction. Les unités défaillantes sont mises hors service, et le central d'entretien en est informé.

Le système controle également si son fonctionnement s'effectue ou non avec des unités ou périphériques hors service, par exemple des magasins (1) vides. Il en informe le central, lequel peut décider l'arrêt du système par télécommande.

La date disponible dans la base de données est controlée par le central, et éventuellement mise à jour.

Les stocks théoriques de chaque journal calculés comme précédemment, sont comparés en permanence avec les stocks pratiques, évalués dans chaque magasin (1) par un capteur approprié (17), par exemple un capteur pondéral. En cas d'anomalie, le centre d'entretien est informé.

Lorsque le stock théorique atteint une valeur minimum, le central est informé. Ce dernier peut alors établir automatiquement une liste des bornes de distribution à réapprovisionner, avec quels journaux, et en quelle quantité.

Dans un exemple pratique, quinze distributeurs autonomes sont en permanence reliés à un système centraliseur (12), par le biais du réseau commuté. Le système centraliseur (12) est à même de restituer sur demande ou périodiquement différentes informations relatives à l'ensemble des distributeurs auxquels il est relié par exemple :
- le suivi de l'état des distributeurs ;
- les alarmes par distributeur ;
- le compte-rendu de gestion ;
. des vendus par type ;
. des méventes par demande non satisfaite soit par "non installation" du magazine, soit par borne vide ;
- la mise en fichier de ces compte-rendus de gestion pour un traitement extérieur sous un tableur afin d'obtenir des fonctions de statistique et de tri, par exemple ;
- le téléchargement des données de base pour les automatismes locaux au niveau des distributeurs.

Le système de distributeur autonome conforme à l'invention permet d'assurer un suivi contenu et systématique de la gestion et de l'état des distributeurs autonomes proprement dits, rationnalisant de fait au maximum l'utilisation de tels distributeurs.

On a décrit précédemment un système de distribution utilisé avec une carte d'abonnement, mais il doit être entendu que celui-ci peut fonctionner exactement de manière similaire avec une carte de crédit spécifique ou une carte de crédit bancaire.

**Revendications**

1/ Distributeur autonome de produits d'édition, comprenant :
- une pluralité de magasins (1a-c) de stockage desdits produits d'édition (2) ;
- un organe apte à prélever un produit (2) dans un magasin (1a-c), et à le délivrer dans une case de réception (21) ;
- un sélecteur (4) du produit choisi par l'utilisateur ;
- un dispositif de paiement par carte (5) apte d'une part à débiter du crédit de ladite carte le montant de l'opération et d'autre part, une fois ce débit validé à induire l'actionnement de l'organe de prélèvement, par l'intermédiaire d'un microprocesseur ;
- une mémoire morte (8) pour le stockage, notamment d'un logiciel de traitement d'information, permettant de dialoguer avec l'utilisateur et assurant le fonctionnement automatique du distributeur, en fonction des informations échangées avec l'utilisateur et avec les différents périphériques ;
**caractérisé** en ce qu'il comporte en outre une connexion (11) pour communiquer avec un système centraliseur (12) de surveillance et de gestion d'un réseau auquel appartient ledit distributeur autonome.

2/ Distributeur autonome selon la revendication 1, caractérisé en ce que la connexion (11) entre les différents distributeurs autonomes du réseau et le système centraliseur (12) est effectuée par le biais des réseaux commutés de télécommunication.

3/ Distributeur selon l'une des revendications 1 et 2, caractérisé en ce que l'organe de prélèvement est constitué par un organe unique qui se déplace devant les différents magasins (1a-c), et prélève le produit sélectionné (2) pour le faire glisser par gravité dans une goulotte reliée à la case de réception (21).

4/ Distributeur selon l'une des revendications 1 à 3 caractérisé en ce que le microprocesseur (7) :
- gère le dialogue avec l'utilisateur ;
- et reçoit les informations envoyées par les capteurs de présence de produits (2) de chaque magasin (1a-c), afin de les traiter et de les transférer au système centraliseur (12).

5/ Distributeur autonome selon la revendication 1 à 4, caractérisé en ce que le système centraliseur (12) comporte pour chaque distributeur :
- des moyens pour afficher le suivi pour chacun d'eux ;
- des alarmes respectivement d'agression, de panne et de pénurie ;
- et des fichiers de gestion.

6/ Carte de paiement (6) associée à un distributeur selon la revendication 1, et comprenant une face de référence (6b) réservée à la présentation d'informations, et une face opposée (6c) comportant un support (6a) pour différentes informations, lisibles et/ou modifiables par machine, dont une information (6a₁) ayant la valeur d'un crédit, caractérisée en ce que la face de référence (6b) comporte une zone (6d) affectée à la reproduction symbolique ou des types de produits pouvant être délivrés à l'utilisateur, et le support (6a) de la face opposée (6c) comporte une zone (6a₂) pour une ou des informations lisibles uniquement par machine identifiant respectivement le ou les mêmes types de produits représentés de manière symbolique sur la face de référence.

7/ Carte selon la revendication 6, caractérisée en ce que la face de référence comporte une autre zone (6e) affectée à la reproduction dudit achat de la carte, en correspondance avec la valeur initiale de l'information présente sur le support (6a₁) de la face opposée identifiant le crédit en cours de ladite carte.

FIG.1

20a 20b 20c

4 4 4

SELECTIONNEZ LA OU LES REVUES SOUHAITEES

13

16

15

INTRODUISEZ VOTRE CARTE

5

Courrier

Publicité

PRENEZ VOTRE PERIODIQUE

21

MERCI

**FIG.2**

6 6b

6e

6d

6a1

6a2

6a

6

6c

**FIG.3**        **FIG.4**

DEBUT

MESSAGE ACCUEIL

CHOIX PERIODIQUES

CONTROLE DISPONIBILITE

AFFICHAGE CHOIX + DISPONIBILITE

CONFIRMATION TRANSACTION

INTRODUCTION CARTE

CONTROLE CARTE

CARTE OK — NON

MESSAGE ERREUR

RETRAIT CARTE

CONTROLE DES CHOIX CARTE

COMPATIBLE — NON

MESSAGE ERREUR

RETRAIT CARTE

TRANSACTION ACCEPTEE ? — NON — OUI

MESSAGE ERREUR

RETRAIT CARTE

OUVERTURE LOGGING PERMANENT RAZ

MAJ CREDIT CARTE

MAJ STOCK STAT

RESTITUTION CARTE

RAZ ECRAN

DISTRIBUTION JOURNAUX

CONTROLES FIN TRANSACTION

CLOTURE LOGGING PERMANENT

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 608 570 (SMH ALCATEL)<br>* Résumé; figures 1,2,18; page 1, lignes 1-34; page 18, ligne 33 - page 21, ligne 7 *<br>--- | 1,3,4 | G 07 F 11/04<br>G 07 F 7/02<br>G 07 F 17/42<br>G 07 F 9/02 |
| Y | CA-A-1 207 411 (J.N. CLINTON)<br>* Figures; revendications; page 24, ligne 19 - page 26, ligne 3 * | 1,3,4 | |
| A | --- | 2,5-7 | |
| D,A | GB-A-2 143 662 (ESSEX ENGINEERING)<br>* Résumé; figures 1,7; page 3, ligne 48 - page 4, ligne 3 *<br>--- | 1,3-6 | |
| A | US-A-4 141 078 (L.E. BRIDGES)<br>* Résumé; figure 1; colonne 1, ligne 42 - colonne 3, ligne 39 *<br>--- | 1,2,4-6 | |
| A | GB-A-2 180 526 (DELVEX)<br>* En entier *<br>--- | 1,4,6 | |
| P,A | WO-A-8 807 727 (VERTX)<br>* Résumé; figures 1-4; revendications; page 19, lignes 22-32; page 33, lignes 7-12 *<br>----- | 1-6 | **DOMAINES TECHNIQUES RECHERCHES (Int. Cl.5)**<br><br>G 07 F |

**Le présent rapport a été établi pour toutes les revendications**

| Lieu de la recherche | Date d'achèvement de la recherche | Examinateur |
|---|---|---|
| LA HAYE | 06-10-1989 | DAVID J.Y.H. |